(19) Europäisches Patentamt

European Patent Office

Office européen des brevets

(11) **EP 1 262 752 B1**

(12) **EUROPÄISCHE PATENTSCHRIFT**

(45) Veröffentlichungstag und Bekanntmachung des Hinweises auf die Patenterteilung:
**03.08.2005   Patentblatt 2005/31**

(51) Int Cl.⁷: **G01J 4/00**

(21) Anmeldenummer: **02010847.8**

(22) Anmeldetag: **15.05.2002**

(54) **Faser-Polarimeter, dessen Verwendung sowie polarimetrisches Verfahren**

Fiber polarimeter, its use, and polarimetric method

Polarimètre à fibre, son utilisation, ainsi qu'une méthode polarimétrique

(84) Benannte Vertragsstaaten:
**DE FR GB IT**

(30) Priorität: **17.05.2001   DE 10124291**
            **06.03.2002   DE 10209826**

(43) Veröffentlichungstag der Anmeldung:
**04.12.2002   Patentblatt 2002/49**

(73) Patentinhaber: **THORLABS GmbH**
**85757 Karlsfeld (DE)**

(72) Erfinder:
 • **Peupelmann, Jens**
   **09633 Krummhennersdorf (DE)**
 • **Krause, Egbert**
   **09217 Burgstädt (DE)**
 • **Bandemer, Adalbert, Dr.**
   **85221 Dachau (DE)**

(74) Vertreter: **Schurack, Eduard F. et al**
**Hofstetter, Schurack & Skora**
**Balanstrasse 57**
**81541 München (DE)**

(56) Entgegenhaltungen:
**US-B1- 6 211 957**

 • **BOUZID A ET AL: "Fiber-optic four-detector polarimeter" OPTICS COMMUNICATIONS, NORTH-HOLLAND PUBLISHING CO. AMSTERDAM, NL, Bd. 118, Nr. 3, 15. Juli 1995 (1995-07-15), Seiten 329-334, XP004062172 ISSN: 0030-4018**
 • **ERDOGAN T ET AL: "TILTED FIBER PHASE GRATINGS" JOURNAL OF THE OPTICAL SOCIETY OF AMERICA - A, OPTICAL SOCIETY OF AMERICA, WASHINGTON, US, Bd. 13, Nr. 2, 1. Februar 1996 (1996-02-01), Seiten 296-313, XP002055129 ISSN: 1084-7529**

Bemerkungen:
Die Akte enthält technische Angaben, die nach dem Eingang der Anmeldung eingereicht wurden und die nicht in dieser Patentschrift enthalten sind.

**Beschreibung**

**Technisches Gebiet**

Die Erfindung betrifft einen Polarimeter in All-Faser-Ausführung, insbesondere eine Anordnung zur Bestimmung der Polarisation, des Polarisationsgrades und der Leistung des in einer Glasfaser geführten Lichtes sowie ein polarimetrisches Verfahren.

Licht ist eine elektromagnetische Welle, deren elektrische Feldstärkekomponenten in der x-y-Ebene senkrecht zur Ausbreitungsrichtung z mit der optischen Kreisfrequenz $\Omega$ schwingen. Jede Welle kann in 2 orthogonale Teilwellen zerlegt werden, deren Amplituden und Phasenlagen eindeutig die Polarisation beschreiben.

Im Fall von linearen Teilwellen entsteht der Ausdruck:

$$\bar{E}(t) = \begin{pmatrix} E_x \cos(\Omega t + \phi_x) \\ E_y \cos(\Omega t + \phi_y) \end{pmatrix} \begin{pmatrix} \bar{e}_x \\ \bar{e}_y \end{pmatrix}$$

Eine Polarisationsveränderung wird durch die Änderung der Phasendifferenz $\Delta\phi = \phi_y - \phi_x$ oder durch Veränderung des Amplitudenverhältnisses bewirkt.

Zur Beschreibung der Polarisation sind mehrere gleichwertige Parameter gebräuchlich. Neben den Parametern der Polarisationsellipse, Azimuth $\theta$ und Elliptizitätswinkel $\varepsilon$, sind die normierten Stokes-Parameter $s_1, s_2, s_3$ weit verbreitet Eine vollständige Beschreibung auch nur teilweise polarisierter Lichtwellen geben die Stokes-Parameter $S_0$, $S_1, S_2$ und $S_3$. Aus diesen sind die normierten Stokes-Parameter $s_1, s_2, s_3$ zur Beschreibung des Polarisationszustands, des Polarisationsgrades und der Gesamtleistung ableitbar.

Der Brechungsindex n einer Wellenplatte ist richtungsabhängig. Damit erfahren die im allgemeinen linearen Teilwellen unterschiedliche Phasengeschwindigkeiten und erlangen eine Phasendifferenz.

Ein Polarisator dämpft die Teilwelle in seiner Sperrrichtung stärker als die orthogonale Komponente in Durchlaßrichtung. Damit wird die transmittierte Leistung polarisationsabhängig und eine einfache Detektion der Polarisation wird ermöglicht.

Der Einsatz eines Polarimeters bzw. eines polarimetrischen Verfahrens hat z.B. folgende Anwendungsgebiete:

- Bestimmung des Polarisationsgrades (Degree of Polarisation, DOP)
- Bestimmung des Polarisationsgrades (DOP) als Regelsignal in einem Polarisations-Moden Dispersions (PMD) -Kompensator
- Bestimmung der polarisationsabhängigen Dämpfung bzw. Verlust (PDL) von optischen Fasern und Komponenten
- Bestimmung der Polarisations-Moden Dispersion (PMD) von optischen Fasern und Komponenten
- Analyse von doppelbrechenden und polarisierenden Materialien
- Bestimmung des Auslöschverhältnisses (Extinktion Ratio, ER) bei polarisationserhaltenden Fasern
- Auswertung von Sensoren auf polarimetrischer Basis (z.B. Faraday-Stromsensor)
- Gewinnung von Regelsignalen in automatischen Polarisationsstellern u.v.m.

Neben "kompletten Polarimetern", die alle vier Stokes-Parameter erfassen, gibt es Einrichtungen, die z.B. nur die Abweichung des Polarisationszustands von einem gewünschten Polarisationszustand bestimmen. Dies kann bereits durch einfache Polarisatoren, Polarisationsstrahlteiler usw. realisiert werden.

Die Polarisation des Lichtes kann mathematisch mit Hilfe des Stokes-Vektors beschrieben werden. Der Stokes-Vektor ist durch die vier Stokes-Parameter $S_0$ ... $S_3$ vollständig bestimmt. Die Stokes-Parameter sind wie folgt definiert $S_0$ (absolute Leistung), $S_1$ (linear horizontal polarisierter Anteil abzüglich dem linear vertikal polarisierten Anteil), $S_2$ (linear 45° polarisierter Anteil abzüglich dem linear -45° polarisierten Anteil), $S_3$ (zirkular rechtsdrehend polarisierter Anteil abzüglich dem zirkular linksdrehenden polarisierten Anteil).

Zur Bestimmung des Polarisationszustandes, des Polarisationsgrades und der Leistung von Licht müssen alle vier Parameter des Stokes-Vektors bestimmt werden.

**Stand der Technik**

Als Polarimeter bekannt ist eine Anordnung, bestehend aus einer rotierenden Wellenplatte in Kombination mit einem fest vor einem Detektor angeordneten Polarisator. Aus dem detektierten Signal können die vier Stokes-Parameter bestimmt werden. Aufgrund mechanisch bewegter Teile ergeben sich bei diesem Verfahren jedoch Grenzen in der Messgeschwindigkeit.

Bekannt sind auch verschiedene Polarimeter-Anordnungen, bei denen mit Hilfe von Strahlteilern, Polarisationsstrahlteilern, Polarisatoren und Wellenplatten der einfallende Lichtstrahl so zerlegt wird, das mit mindestens vier entsprechend angeordneten Detektoren die vier Stokes-Parameter bestimmt werden können. Diese Anordnungen erfordern jedoch in der Regel einen hohen Justageaufwand [T. Pikaar et al.: Fast complete polarimeter for optical fibres; E-FOC 1989].

Ein weiterer Nachteil der bisher erwähnten Anordnungen ist die Tatsache, dass mit diesen Anordnungen eine Inline-Messung, also eine Bestimmung der Polarisationseigenschaften des in der Glasfaser geführten Lichtes in der Regel nicht möglich ist. Diesen Nachteil vermeiden sogenannte Faser-Polarimeter oder Inline-Polarimeter.

Bekannt sind verschiedene Ausführungsformen von Faser-Polarimetern. In der Patentschrift US5,815,270 wird hierzu ein Anordnung bestehend aus einem 1x5-Schmelzkoppler sowie nachgeschaltet Polarisatoren und Wellenplatte offenbart.

Eine weitere bekannte Anordnung wird in [R. M. A. Azzam: Inline light saving photopolarimeter and its fiber optic analog; Optics Letters, Vol. 12, No. 8, pp. 558 - 560, 1987] vorgestellt, wobei polarisationsabhängige Koppler zur Bestimmung der Stokes-Parameter verwendet werden.

Eine weitere bekannte Anordnung wird in [M.A. Habli: Experimental implementation of a fiber optic four detector photopolarimeter; Optik, Vol. 110, No. 9, pp. 433 - 435, 1999] vorgestellt. Darin werden angeschliffene Fasern verwendet, um einen polarisationsabhängigen Anteil des Lichtes aus der Faser auszukoppeln.

Eine weitere Anordnung eines Faser-Polarimeters offenbart die Patentschrift US6,211,957B1. Hiernach werden schräge Faser-Bragg-Gitter verwendet, wobei die Gitterperiode und der Winkel zwischen Gitterebene und Faserachse so gewählt werden, daß Licht vom geführten Grundmode in einen Strahlungsmode koppeln kann. Diese Kopplung ist stark polarisationsabhängig. Zur Bestimmung der vier Stokes-Parameter werden vier unterschiedlich orientierte Gitter verwendet, wobei zusätzlich zur Unterscheidung zwischen zirkular rechts- und zirkular linkspolarisiertem Licht eine UV-induzierte Wellenplatte zwischengeschaltet wird. UV-induzierte Doppelbrechung wird in [T. Erdogan et al.: Characterization of UV-induced birefrigence in photo-sensitive Ge-doped silica optical fibers; J. Opt. Soc. Am. B/Vol. 11, No. 10, pp. 2100 - 2105, 1994] beschrieben. Die Erzeugung von Doppelbrechung durch Biegung der Glasfaser wird z.B. in [R. Ulrich et al.: Bending-induced birefringence in single-mode fibers; Optics Letters, Vol. 5, No. 6, June 1980] beschrieben.

Nachteilig an dieser Lösung ist, dass die Faser-Bragg-Gitter mit vier unterschiedlichen Orientierungen zur Faserachse eingeschrieben werden müssen (0°, 90° und 45°, 135°). Dies kann bei der Herstellung der Faser-Bragg-Gitter durch eine entsprechende Drehung der Glasfaser um die Faserachse erreicht werden, ist aber mit erheblichem Aufwand verbunden. Dies bedeutet auch, dass die einzelnen Faser-Bragg-Gitter Licht in vier unterschiedliche Richtungen auskoppeln. Die Verwendung von planaren Detektorzeilen oder Detektorarrays ist somit nicht möglich.

Ein weiterer Nachteil besteht in der Asymmetrie der ausgekoppelten Polarisationsanteile. Bezogen auf den Eingang werden die Polarisationszustände linear 0°, linear 45° und linear 90°, sowie eine nahezu zirkuläre Polarisation ausgekoppelt. Diese Anordnung verursacht zwangsläufig polarisationsabhängige Verluste (PDL) der Gesamtanordnung, da sich die PDL der Einzelgitter (es werden ja Anteile der Lichtintensität einer bestimmten Polarisationsrichtung aus der Faser ausgekoppelt) nicht gegenseitig kompensieren. Des weiteren kann mit drei linearen Polarisationszuständen und einem näherungsweise zirkularen Polarisationszustand das Optimum bei der Analyse eines beliebigen Polarisationszustandes nicht erreicht werden, wenn reale Detektorströme ausgewertet werden.

Der Aufsatz von [A. Bouzid et al.: Fiber-optic four-detector polarimeter; Optics Communications, Vol. 18, 1995, pp. 329-334] betrifft ein sogenanntes "In-Line" faseroptisches Polarimeter. In dem genannten Aufsatz werden vier extern induzierte, in der Faser angeordnete Gitter verwendet, zusammen mit vier Fotodetektoren, um die Polarisationsmessungen durchzuführen. Dieser Aufsatz gibt vor, die Messung aller vier Stokes-Parameter gleichzeitig zu ermöglichen, indem die Intensität des absorbierten oder reflektierten oder übertragenen Lichts durch vier Fotodetektoren an vier unterschiedlichen Einfallsebenen gemessen wird. Wie in der US 6,211,957 B1 richtigerweise festgestellt wurde, lässt die Anordnung gemäß dem genannten Aufsatz jedoch eine Wellenplatte vermissen, welche nötig ist, um die erforderlichen Stokes-Parameter genau definieren zu können. Überdies mangelt es dem Polarimeter gemäß dem genannten Aufsatz an ausreichender Bandbreite, um sinnvoll in Telekommunikationsanwendungen eingesetzt werden zu können.

## Darstellung der Erfindung

Es ist Aufgabe der Erfindung, einen technologisch einfacheren und kostengünstigeren Faser-Polarimeter mit besseren Qualitätsmerkmalen sowie ein entsprechendes polarimetrisches Verfahren vorzuschlagen.

Diese Aufgabe wird erfindungsgemäß durch ein Polarimeter gemäß Anspruch 1 und ein photometrisches verfahren nach Anspruch 16. Bevorzugte Ausführungsformen sind Gegenstand der Unteransprüche.

Dementsprechend, sind die Faser-Bragg-Gitter unter einem bestimmten Winkel zur Faserachse so eingeschrieben, dass an jedem Gitter zwei von der Polarisation abhängige Anteile des Lichtes aus der Faser ausgekoppelt werden und dieses abgestrahlte Licht zwei räumlich getrennte und bei unterschiedlichen Polarisationszuständen auftretende Intensitätsmaxima aufweist, die mittels Detektorpaaren detektiert werden bzw. detektiert werden können.

Die Herstellung solcherart Faser-Bragg-Gitter erfolgt bevorzugt durch UV-induzierte Brechzahlmodulation im Kern der Glasfaser. Das hierfür benötigte Interferenzmuster wird in einer vorteilhaften Ausführung mittels einer geeigneten Phasenmaske erzeugt, wobei die Phasenmaske zur Faserachse in einem bestimmten Winkel angeordnet ist.

Im Allgemeinen verwendet man eine Einmoden-Standardfaser. Es kann aber auch vorteilhaft sein, eine Glasfaser mit einem speziellen Brechzahl- und Dotierungsprofil zu verwenden, um z.B. die Auskoppeleffektivität zu erhöhen, die Differenz der ausgekoppelten Polarisationszustände zu optimieren oder das Auslöschungsverhältnis (Extinktion Ratio, ER) der so auskoppelbaren Polarisationszustände zu verbessern.

Nach einer vorteilhaften Ausführung der erfindungsgemäßen Anordnung besteht das Faser-Polarimeter aus wenigstens zwei speziellen Faser-Bragg-Gittern und einer zwischengeschalteten Wellenplatte. Die Faser-Bragg-Gitter können in Bezug auf die Faserachse unterschiedlich orientiert sein.

In dieser Anordnung werden bevorzugt nur zwei (anstelle von vier) Faser-Bragg-Gitter benötigt. Die beiden von jedem Gitter polarisationsabhängig ausgekoppelten Leistungen werden von je einem Detektorpaar detektiert und in ein elektrisches Signal gewandelt. Beispielsweise können die beiden Polarisationszustände, die ein Faser-Bragg-Gitter auskoppelt linear 0° polarisiert und linear 80° polarisiert sein. Diese Signale werden mit geeigneter Hardware erfasst und softwaremäßig weiter verarbeitet. Aus diesen Daten werden mittels einer Berechnungsvorschrift und unter Berücksichtigung von Kalibrierdaten die Stokes-Parameter bestimmt. Als Detektoren werden vorzugsweise Photodioden mit geeigneter spektraler Empfindlichkeit eingesetzt. Die Detektoren, vorzugsweise Detektorpaare, sind so angeordnet, dass ihre Positionen und Größen mit der Lage und Größe der beiden, räumlich getrennten Maxima des ausgekoppelten Lichtes übereinstimmen. Da jeweils ein Faser-Bragg-Gitter zwei verschiedene Polarisationszustände auskoppelt und unter räumlich verschiedenen Winkeln abstrahlt, wird die vorteilhafte Verwendung von Doppel-Photodioden als Detektoren möglich.

Nach einer weiteren vorteilhaften Ausführungsform der erfindungsgemäßen Anordnung werden die Detektoren oder bevorzugt die Detektorpaare so dicht wie möglich zur Faser angeordnet, um eine möglichst hohe Signalintensität zu erzielen. Eine weitere Verbesserung der Signalintensität und die Unterdrückung störender Fabry-Perot-Effekte kann durch die Vermeidung des Glas-Luft-Überganges an der Faseroberfläche und der damit verbundenen Strahlaufweitung aufgrund der Linsenwirkung erreicht werden.

Die in den Anordnungen benötigten Wellenplatten können vorteilhaft durch Biegung der Glasfaser erzeugt werden. Weitere vorteilhafte Ausführungen sind UV-induzierte Doppelbrechung, die Verwendung eines Abschnitts doppelbrechender Glasfaser (polarisationserhaltende Glasfaser), oder die Erzeugung von Doppelbrechung durch Druckbelastung der Glasfaser.

Durch die Faser-Bragg-Gitter wird im allgemeinen nur ein geringer Teil des Lichtes ausgekoppelt, so dass die Einfügedämpfung der Anordnung sehr gering ist. Da die ausgekoppelte Leistung aber polarisationsabhängig ist, kann die Anordnung einen geringen polarisationsabhängigen Verlust (PDL) aufweisen. Bei gleichartig PDL-behafteten Einzelgittern wird die PDL durch vorteilhafte Auswahl der ausgekoppelten Polarisationszustände und geeignete Parameter der Wellenplatte vermieden. Von den insgesamt vier ausgekoppelten' Polarisationszuständen ergeben jeweils die durch das gleiche Faser-Bragg-Gitter ausgekoppelten Polarisationszustände einen Polarisations-Mittelwert. Sind die Mittelwerte der ausgekoppelten Polarisationszustände der beiden Faser-Bragg-Gitter zueinander orthogonal, dann kompensieren sich die polarisationsabhängigen Verluste der gesamten Anordnung und die Gesamtanordnung hat keine PDL.

Alternativ kann jedem Faser-Bragg-Gitter der erfindungsgemäßen Anordnungen ein weiteres Faser-Bragg-Gitter nachgeschaltet werden, dessen Parameter identisch sind, dessen Orientierung orthogonal zu dem bestehenden Faser-Bragg-Gitter ist, so daß die polarisationsabhängigen Verluste des einen Faser-Bragg-Gitters durch ein nachgeschaltetes Faser-Bragg-Gitter kompensiert wird.

Nach einer weiteren vorteilhaften Ausführungsform der erfindungsgemäßen Anordnung werden die Gitter in schwach doppelbrechende (polarisationserhaltende) Glasfaser eingeschrieben. In dieser Anordnung übernimmt der zwischen den Gittern befindliche Abschnitt der Faser die Funktion der Wellenplatte.

Eine weitere vorteilhafte Ausführungsform ergibt sich, wenn die erfindungsgemäße Anordnung zur Erzeugung eines Regelsignals für die polarisationsrichtige Einkopplung in die Hauptachse einer polarisationserhaltenden Faser genutzt wird. Dazu wird die polarisationserhaltende Faser direkt an den Ausgang, d.h. unmittelbar nach dem letzten Gitter, angeordnet. Bei dieser Variante kann die Orientierung der Hauptachsen der polarisationserhaltenden Faser beliebig in Bezug auf die Orientierung der Gitter sein. Die Kalibrierung dieser Anordnung als Polarimeter wird vorteilhaft so durchgeführt, dass die Polarisation in Bezug auf die Hauptachsen der schwach doppelbrechenden (polarisationserhaltenden) Faser gemessen wird.

Nach einer weiteren vorteilhaften Ausführungsform der erfindungsgemäßen Anordnung zur Gewinnung eines Regelsignals für die polarisationsrichtige Einkopplung in eine polarisationserhaltende Faser wird erfindungsgemäß nur ein Faser-Bragg-Gitter verwendet, wobei die Orientierung der beiden durch das Gitter ausgekoppelten Polarisationszustände nicht exakt mit einer der Hauptachsen der doppelbrechenden Faser übereinstimmen muß. Diese Tatsache erlaubt größere Herstellungstoleranzen bei der Winkeljustage zwischen den Hauptachsen der polarisationserhaltenden Faser und den ausgekoppelten Polarisationszuständen.

Aus den beiden Detektorströmen kann ein Regelsignal generiert werden, das für die beiden ausgekoppelten Polarisationszustände ein maximales Ausgangssignal liefert, wenn in die Hauptachse der polarisationserhaltenden Faser gekoppelt wird.

Die erreichbare Güte für die optimale Einkopplung in die polarisationserhaltende Faser, ausgedrückt als Extinktion Ratio (ER), kann damit gegenüber herkömmlichen Anordnungen wesentlich gesteigert werden.

Für die Funktionsweise dieser Anordnung ist es egal, ob das Faser-Bragg-Gitter unmittelbar vor der polarisations-erhaltenden Faser oder in dieser selbst angeordnet ist.

## Kurze Beschreibung der Zeichnungen

Weitere Merkmale, Aufgaben und Vorteile der vorliegenden Erfindung werden nachfolgend beispielsweise anhand von bevorzugten Ausführungsbeispielen mit Bezug auf die Zeichnungen näher erläutert werden.

Die zugehörigen Zeichnungen zeigen dabei:

Figur 1: Eine einfache Ausführungsform der erfindungsgemäßen Anordnung in prinzipieller Darstellung mit Erzeugung der Wellenplattenfunktion durch Biegung der Faser (Faserschleife)

Figur 2a,b: Weitere Ausführungsformen der erfindungsgemäßen Anordnung in prinzipieller Darstellung mit UV induzierter Wellenplatte

Figur 3: Eine weitere Ausführungsform der erfindungsgemäßen Anordnung in prinzipieller Darstellung mit polarisationserhaltender Faser (PMF) als Ausgangsfaser

Figur 4a: Eine weitere Ausführungsform der erfindungsgemäßen Anordnung in prinzipieller Darstellung mit einem speziellen Gitter in Standardfaser und PMF als Ausgangsfaser

Figur 4b: Eine weitere Ausführungsform der erfindungsgemäßen Anordnung in prinzipieller Darstellung mit einem speziellen Gitter in polarisationserhaltender Faser (PMF) und einer PMF als Ausgangfaser

Figur 5: Eine mögliche Weiterentwicklung zum Stand der Technik, Anordnung in prinzipieller Darstellung mit einem Detektorarray

Figur 6: Anordnung zur Herstellung der speziellen Faser-Bragg-Gitter in prinzipieller Darstellung

Figur 7: Anordnung zur Bestimmung der Abstrahlcharakteristik in prinzipieller Darstellung

Figur 8: Optimale Verteilung der ausgekoppleten Polarisationszustände auf er Poincaré-Kugel nach Azzam

Figur 9: Optimale Verteilung der ausgekoppelten Polarisationszustände auf der Poincaré-Kugel nach der erfindungsgemäßen Anordnung

Figur 10a,b: Exemplarisch gemessene Intensitätsverteilung des ausgekoppelten Lichtes eines schrägen Gitters in der bekannten Ausführungsform

Figur 11a,b: Exemplarisch gemessene Intensitätsverteilung des ausgekoppelten Lichtes eines schrägen Gitters in der erfindungsgemäßen Ausführungsform mit polarisierter Lichtquelle

Figur 12: Exemplarisch gemessene Intensitätsverteilung des ausgekoppelten Lichtes eines schrägen Gitters in der erfindungsgemäßen Ausführungsform mit unpolarisierter Lichtquelle

## Darstellung von Ausführungsbeispielen

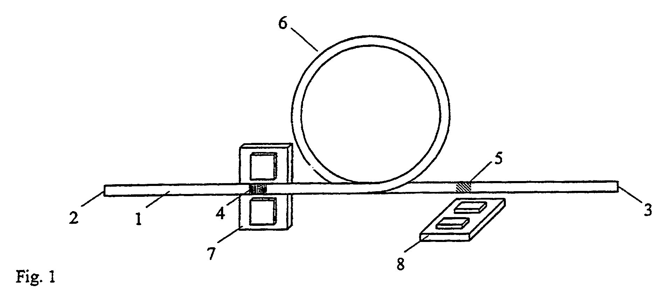

Nach Figur 1 besteht die Anordnung zur Bestimmung der Polarisationseigenschaften des in der Glasfaser geführten Lichtes aus einer Glasfaser 1 mit einem Eingang 2 und einem Ausgang 3. Der Kern der Glasfaser 1 weist zwei spezielle Faser-Bragg-Gitter 4, 5 auf, deren Orientierung um 90° versetzt angeordnet ist. Faser-Bragg-Gitter entstehen durch Veränderung der Struktur des Kernes von wellenleitenden Glasfasern. Hier werden Gitterstrukturen als Zonen unterschiedlicher Brechungsindizes im Glasfaserkern bevorzugt fotorefraktiv mittels eines UV-Hochleistungslasers erzeugt. Der belichtete Teil der Faser wirkt als Beugungsgitter ("Gratings"). Daher können Faser-Bragg-Gitter als faseroptische Komponenten dienen, die Licht einer bestimmten Wellenlänge reflektieren, während alle übrigen Wellenlängen transmittiert werden. Die Reflexion des Lichtes erfolgt durch die erzeugte periodische Brechungsindexstruktur innerhalb der Lichtleitfaser. Zwischen den Faser-Bragg-Gittern 4, 5 ist eine durch Faserbiegung erzeugte λ/4-Wellenplatte 6 angeordnet, deren eine Hauptachse mit der Orientierung des ersten Faser-Bragg-Gitters 4 übereinstimmt und dessen zweite Hauptachse mit der Orientierung des zweiten Faser-Bragg-Gitters 5 übereinstimmt. Des weiteren weist die Anordnung zwei Detektorpaare 7, 8 auf, die zur Bestimmung der durch die Faser-Bragg-Gitter 4, 5 ausgekoppelten und abgestrahlten Signalanteile dienen. Des weiteren kann eine (nicht dargestellte) Brechzahlanpassung zwischen den Faser-Bragg-Gittern 4, 5 und den Detektorpaaren 7, 8 vorgesehen werden.

Die Funktionsweise dieser Anordnung ist folgende:

Das am Eingang 2 der Glasfaser 1 in die Anordnung eingekoppelte Licht wird in deren Kern zum ersten Faser-Bragg-Gitter 4 geführt. Das Faser-Bragg-Gitter 4 besitzt die Eigenschaft, zwei geringe Anteile der Lichtintensität aus der Glasfaser 1 auszukoppeln. Diese Eigenschaft wird durch die Parameter Kernbrechzahl der Glasfaser 1, UV-induzierte Brechzahlmodulation sowie Abstand, Winkel und Form der Gitterlinien des Faser-Bragg-Gitters 4 bestimmt. Bei geeigneter Wahl dieser Parameter ist die Auskoppeleffektivität und die Intensitätsverteilung des abgestrahlten Lichtes von der Polarisation des eingekoppelten Lichtes abhängig. Ein großer Teil des Lichtes passiert das Faser-Bragg-Gitter 4 und gelangt zur Wellenplatte 6. Mittels der Wellenplatte 6 erfolgt eine Änderung des Zustands der Polarisation. Das so veränderte Licht gelangt zum zweiten Faser-Bragg-Gitter 5. Dessen Funktionsweise ist identisch zum Faser-Bragg-Gitter 4, d.h. es weist identische Auskoppeleffektivitäten und Intensivitätsverteilungen auf. Bezogen auf ihre individuelle Orientierung unterscheiden sich die ausgekoppelten Polarisationszustände nicht. Da aber das zweite Faser-Bragg-Gitters 5 senkrecht zur Orientierung des ersten Gitters 4 angeordnet ist und mittels Wellenplatte 6 zusätzlich eine Polarisationsdrehung erfolgt, unterscheiden sich, bezogen auf den Fasereingang 2, die vom ersten Faser-Bragg-Gitter 4 ausgekoppelten Polarisationszustände von den Polarisationszuständen, die durch das zweite Faser-Bragg-Gitter 5 ausgekoppelt werden.

Mittels geeignet dimensionierter, entsprechend der Intensitätsmaxima justierter, und fest mit der Glasfaser verbundener Detektorpaare 7, 8 erfolgt die Bestimmung der Intensität der ausgekoppelten Signalanteile. Durch eine Brechzahlanpassung zwischen Glasfaser 1 und den Detektorpaaren 7, 8 werden störende Fabry-Perot-Effekte vermieden. Aus den vier Detektorsignalen der zwei Detektorpaare 7, 8 werden mittels einer Berechnungsvorschrift und unter Berücksichtigung von Kalibrierdaten die vier Stokes-Parameter bestimmt, die den Polarisationszustand, den Polarisationsgrad und die Leistung des in der Glasfaser 1 geführten Lichtes eindeutig beschreiben.

Die unter realen Meßbedingungen (z.B. Rauschen, Drift, A/D-Fehler) erreichbare Genauigkeit des Polarimeters hängt in großem Maße von der Determinante der Instrumentenmatrix ab. Die Instrumentenmatrix M stellt die mathematisch exakte Verbindung zwischen den gemessenen Strömen $I_0$ bis $I_3$ und den zu ermittelnden Stokes-Parametern $S_0$ bis $S_3$ her.

$$\begin{bmatrix} S_0 \\ S_1 \\ S_2 \\ S_3 \end{bmatrix} = \begin{bmatrix} m_{00} & m_{01} & m_{02} & m_{03} \\ m_{10} & m_{11} & m_{12} & m_{13} \\ m_{20} & m_{21} & m_{22} & m_{23} \\ m_{30} & m_{31} & m_{32} & m_{33} \end{bmatrix} * \begin{bmatrix} I_0 \\ I_1 \\ I_2 \\ I_3 \end{bmatrix} \; ; \; S = M * I$$

Die Determinante der Instrumentenmatrix M erlaubt eine Aussage über die Stabilität der errechneten Polarisationswerte (Polarisation, DOP und Leistung) bei Variation der gemessenen 4 Detektorströme. Für stabile Meßwerte ist eine maximal große Determinante vorteilhaft.

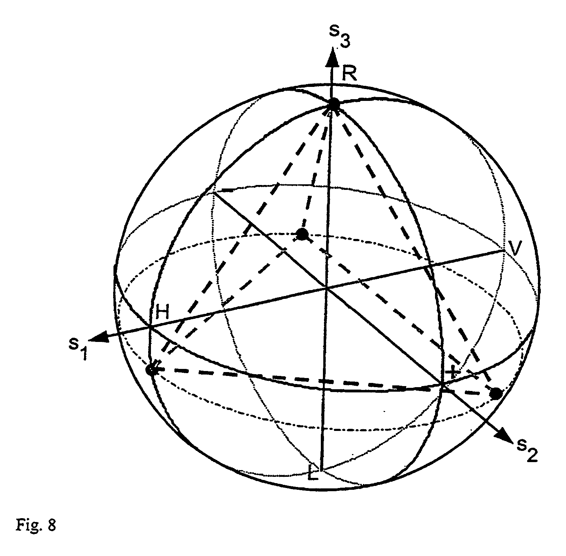

In [R.M.A. Azzam et al.: General analysis and optimization of the four-detector photopolarimeter; J.Opt.Soc.Am., Vol. 5, No. 5, May 1988] werden als optimale Polarisationen rechts zirkular und 3 linkselliptische Polarisationen mit dem Elliptizitätswinkei -9,736° und den Azimuthwinkeln 0°, 60° und -60° genannt. Diese 4 Polarisationen bilden die Eckpunkte der Pyramide mit dem größmöglichen Volumen, die in die Poincaré-Kugel eingeschrieben werden kann, siehe Figur 8. Diese Eigenschaft bedeutet gleichzeitig die maximale Determinante der Instrumentenmatrix des Polarimeters und die größtmögliche Stabilität der Meßwerte.

Mit der bevorzugten Anordnung nach Figur 1 kann bei geeigneter Wahl der Gitter- und Wellenplattenparameter dieses theoretische Maximum erreicht werden.

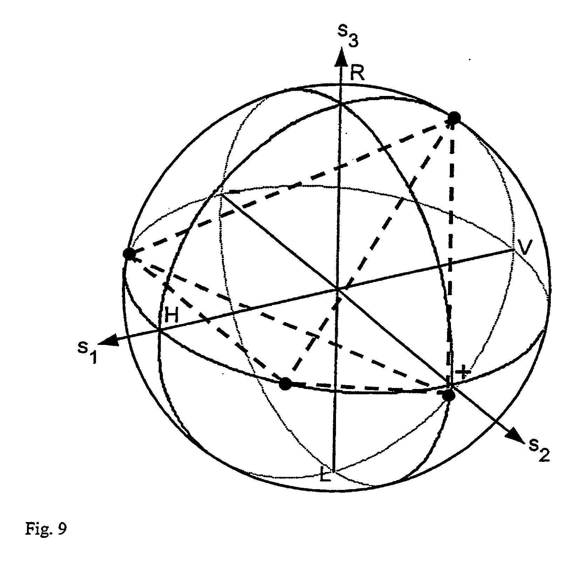

Die optimale Wellenplatte hat eine Verzögerung von $\lambda/4 = 90°$. Die optimalen Faser-Bragg-Gitter koppeln je 2 lineare Polarisationen aus, die zu den Hauptachsen der Wellenplatte (0°/90°) eine physische Orientierung von ±27,3675° aufweisen. Bezogen auf den Eingang entstehen 2 lineare Polarisationen mit ±(2*27,3675°) Azimuthwinkel und 2 elliptische Polarisationen mit den Elliptizitätswinkeln ±(2*27,3675°) und einem Azimuth von 90°, siehe Figur 9.

Das Volumen der resultierenden Pyramide, die Determinante der Instrumentenmatrix M und die Stabilität der Meßwerte ist bei dieser Konstellation identisch zu der von Azzam et al., denn in beiden Konstellationen sind alle 4 Polarisationen durch einen Raumwinkel von 109,47° voneinander getrennt.

Aufgrund der geringen, polarisationsabhängigen Auskoppelung von Licht durch die Faser-Bragg-Gitter ist die der polarisationsabhängige verlust (PDL) gering. Beispielsweise wird dieser Vorteil der PDL-Freiheit in der Anordnung nach Figur 1 dann erreicht, wenn das erste Faser-Bragg-Gitter 4 zwei lineare, symmetrisch zur horizontalen Achse liegende Polarisationszustände auskoppelt und das zweite Faser-Bragg-Gitter 5 zwei, bezogen auf den Eingang elliptische, zur vertikalen Achse symmetrisch liegende Polarisationszustände auskoppelt.

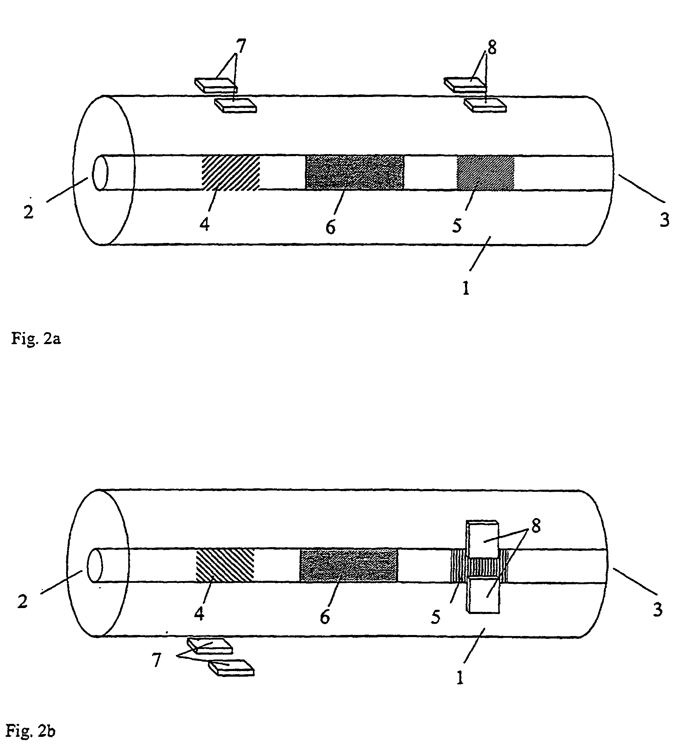

Figur 2a und b zeigen eine weitere bevorzugte Ausführungsform der erfindungsgemäßen Anordnung. Diese unterscheidet sich von Figur 1 nur dadurch, dass die Wellenplatte 6 als UV-induzierte Wellenplatte 6 ausgeführt ist. Die Hauptachsen der Wellenplatte sind in Figur 2b so orientiert, dass sie mit dem Mittelwerte der beiden durch das erste Faser-Bragg-Gitter 4 ausgekoppelten Polarisationszuständen und dem Mittelwert der beiden durch das zweite Faser-Bragg-Gitter 5 ausgekoppelten Polarisationszustände zusammenfallen. Bei einer Anordnung gemäß Figur 2b wäre die Orientierung der Hauptachsen horizontal und vertikal. In Figur 2b ist die vorteilhafte Anordnung mit zueinander orthogonalen Auskoppelrichtungen der beiden Faser-Bragg-Gitter dargestellt, Figur 2a stellt eine weitere, jedoch nicht optimale Konfiguration dar.

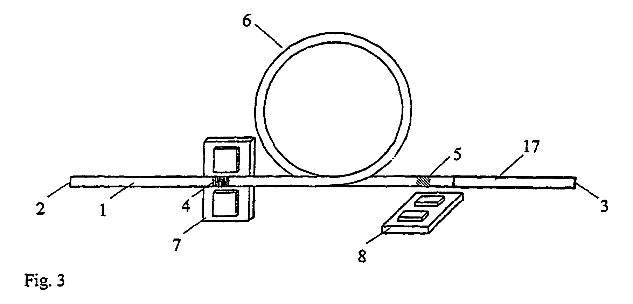

Figur 3 zeigt eine weitere bevorzugte Ausführungsform der erfindungsgemäßen Anordnung gemäß Figur 1. Dabei wird die Ausgangsfaser 17 der Anordnung als polarisationserhaltende Faser ausgeführt. In diesem Fall kann die Anordnung zur Gewinnung von Regelsignalen für die polarisationsrichtige Einkopplung in die Hauptachse der polarisationserhaltenden Faser 17 genutzt werden. Die Änderung des Polarisationszustandes kann dabei durch einen, der Anordnung vorgeschalteten und mit dem Regelsignal angesteuerten Polarisationssteller erfolgen. Da die Messung der Polarisation unmittelbar vor der polarisationserhaltenden Faser 17 erfolgt, können keinerlei Polarisationsumwandlungen, z.B. durch Single-Mode-Verbindungsfasern, die erreichte optimale Einkopplung in die polarisationserhaltende Ausgangsfaser stören.

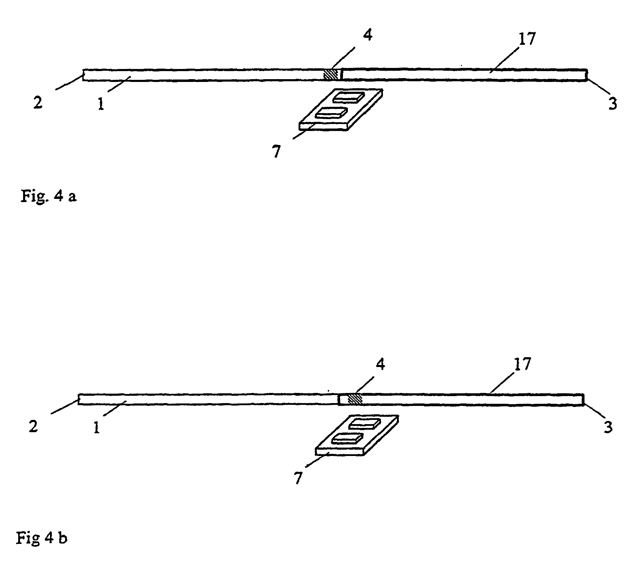

Nach Figur 4 besteht die Anordnung zur Gewinnung von Regelsignalen für die polarisationsrichtige Einkopplung in die Hauptachse einer polarisationserhaltenden Faser 17 vorteilhafterweise aus einer Glasfaser 1 mit einem Eingang und einer polarisationserhaltenden Glasfaser 17 als Ausgang 3. Des weiteren weist die Anordnung ein erfindungsgemäßes Faser-Bragg-Gitter 4 auf, dass entweder wie in Figur 4a dargestellt, unmittelbar vor oder wie in Figur 4b dargestellt in der polarisationserhaltenden Glasfaser 17 angeordnet ist. Dabei kann die Orientierung einer der beiden ausgekoppelten Polarisationszustände des Faser-Bragg-Gitters 4 mit der Orientierung einer Hauptachse der polarisationserhaltenden Glasfaser 17 übereinstimmen. Auch die Übereinstimmung des Mittelwertes der beiden ausgekoppelten Polarisationszustände des Faser-Bragg-Gitters 4 mit der Hauptachse der polarisationserhaltenden Glasfaser 17 kann vorteilhaft sein.

Des weiteren weist die Anordnung ein Detektorpaar 7 auf, das zur Bestimmung der durch das Faser-Bragg-Gitter 4 ausgekoppelten und abgestrahlten Signalanteile dient. Aus den beiden Detektorsignalen wird ein exaktes Regelsignal für einen beispielsweise der Anordnung vorgeschalteten Polarisationssteller gewonnen. Die Signaldetektion mit zwei Photodioden ist für die Regelung der Polarisation hilfreich, da damit die Richtung der Polarisationsabweichung näher bestimmt werden kann und somit eine schnelle und zielorientierte Polarisationsregelung ermöglicht wird. Durch elektronische oder mathematische Gewichtung der Detektorsignale kann erreicht werden, dass das gewichtete Regelsignal maximal ist, wenn der Polarisationszustand exakt mit der Hauptachse der polarisationserhaltenden Faser 17 übereinstimmt.

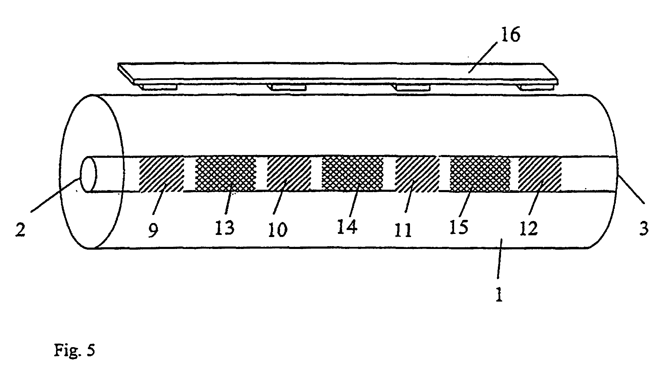

Figur 5 zeigt eine weitere Ergänzung zum Stand der Technik. Hiernach werden Faser-Bragg-Gitter 9, 10, 11, 12 verwendet, wobei das von diesen Gittern ausgekoppelte und abgestrahlte Licht gemäß dem Stand der Technik hier jedoch jeweils nur ein Intensitätsmaxima aufweist und mittels einer Detektorzeile 16 detektiert wird. Der wesentliche Unterschied zum offenbarten Stand der Technik ist jedoch, dass alle Faser-Bragg-Gitter 9-12 mit der gleichen Orientierung zur Faserachse eingeschrieben werden. Zwischen jeweils zwei benachbarten Faser-Bragg-Gittern 9 und 10, 10 und 11, 11 und 12 werden Wellenplatten 13, 14, 15 mit bestimmter Verzögerung und Orientierung angeordnet.

In der in Figur 5 gezeigten Anordnung sind mindestens vier schräge Faser-Bragg-Gitter hintereinander und mit gleicher Orientierung zur Faserachse angeordnet, wobei das ausgekoppelte und abgestrahlte Licht jedes Gitters nur ein Intensitätsmaxima aufweist. Die entsprechenden Detektoren werden alle auf einer Seite der Glasfaser angeordnet. Dies ermöglicht die Verwendung von Detektorzeilen oder Arrays, was einen erheblichen Vorteil darstellt. Zwischen zwei benachbarten Faser-Bragg-Gittern wird jeweils eine Wellenplatte mit bestimmter Orientierung und Verzögerung angeordnet, so dass trotz gleicher Orientierung der Faser-Bragg-Gitter die Bestimmung der vier Stokes-Parameter aus den vier Detektorsignalen möglich wird. Beispielsweise könnten die 4 Faser-Bragg-Gitter mit der Orientierung 0°, getrennt durch 3 $\lambda/4$-Wellenplatten mit der Orientierung 45°, 0° und wieder 0° angeordnet werden. Da alle Faser-Bragg-Gitter in die gleiche Richtung abstrahlen, wird die vorteilhafte Verwendung von Zwei- oder Vier-Quadranten Photodioden bzw. von planaren Detektorzeilen oder-arrays möglich.

Beim Einschreiben von Faser-Bragg-Gittern in optische Fasern wird bevorzugt ausgenutzt, daß durch Einwirkung leistungsstarker UV-Strahlung (Excimer-Laser: KrF, ArF) z.B. auf mit Germanium dotiertes Quarzglas sich dauerhaft der Brechungsindex des Faserkerns erhöht. Dieser Einschreib-Prozeß kann entweder durch interferometrische Überlagerung zweier Teilstrahlen eines aufgeteilten Laserstrahls, durch transversale Laser-Belichtung einer vorgefertigten Phasenmaske oder durch punktuell gesteuerte Laser-Belichtung der optischen Faser erfolgen. In jedem Falle wird eine bleibende periodische Strukturveränderung der Brechzahl im Faserkern erzeugt Diese Vielzahl von Reflexionsstellen entspricht einem optischen Gitter und kann äquidistante oder auch variierende Abstände aufweisen.

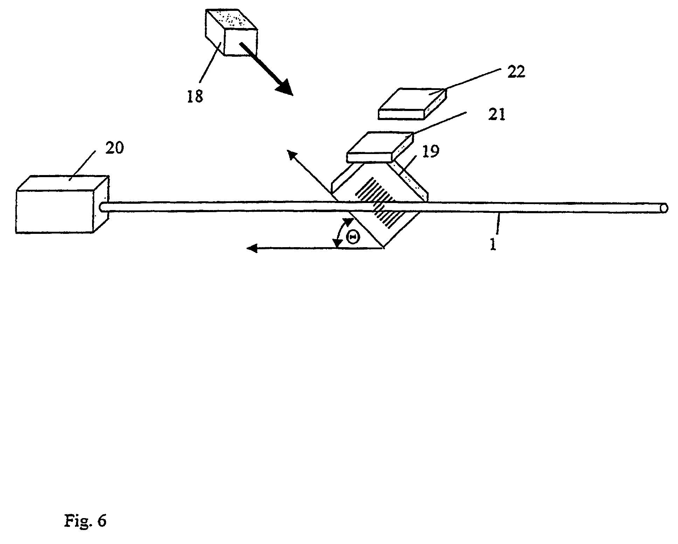

In Figur 6 ist eine bevorzugte Anordnung zur Herstellung der speziellen Faser-Bragg-Gitter in prinzipieller Form gezeigt. Sie besteht aus einem UV-Laser 18, einer Phasenmaske 19 und der Glasfaser 1. Weiterhin sind Mittel zur Positionierung von Faser 1 und Phasenmaske 19, eine depolarisierte Lichtquelle 20 sowie großflächige Detektoren 21, 22 vorgesehen. Durch UV-Belichtung der Glasfaser 1 werden die benötigten schrägen Faser-Bragg-Gitter hergestellt. Das von den Faser-Bragg-Gittern ausgekoppelte Licht weist zwei räumlich getrennte und bei unterschiedlichen Polarisationen auftretende Intensitätsmaxima auf. Diese räumliche Verteilung entsteht bei geeigneter Wahl von Gitterkonstante und Winkel Θ sowie exakter Justage des Schreibstrahls. Die ausgekoppelte Leistung kann mittels geeignet positionierter Detektoren 21, 22 beobachtet und ggf. durch Veränderung der Justage zwischen Schreibstrahl, Phasenmaske und Faser auch während der Herstellung korrigiert werden. Durch die Verwendung einer Zylinderlinse zur Strahlfokussierung kann der Herstellungsprozeß erheblich beschleunigt werden.

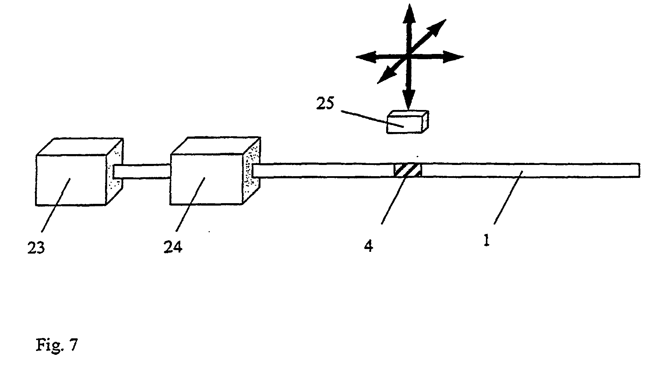

Figur 7 zeigt eine Anordnung zur Bestimmung der Abstrahlcharakteristik der Faser-Bragg-Gitter. Sie besteht aus einer polarisierten Lichtquelle 23, einem Polarisationssteller 24, dem zu untersuchenden Faser-Bragg-Gitter 4 und einem mit geeigneten Mitteln positionierbaren Detektor 25 mit kleiner Detektionsfläche zur Abtastung der räumlichen Intensitätsverteilung. Durch Variation der Detektorposition kann die Abstrahlcharakteristik bestimmt werden. Durch Variation des Polarisationszustandes mittels Polarisationssteller 24 kann die Veränderung der Abstrahlcharakteristik beobachtet werden. Verwendet man eine depolarisierte Lichtquelle 20, z.B. eine ASE-Quelle, kann der Polarisationssteller 24 entfallen.

Figur 8 zeigt die optimale Verteilung der 4 ausgekoppelten Polarisationen (bezogen auf den Fasereingang) nach [R.M.A. Azzam et al.: General analysis and optimization of the four-detector photopolarimeter, J.Opt.Soc.Am., Vol. 5, No. 5, May 1988].

Die Polarisationen rechts zirkular und 3 linkselliptische Polarisationen mit dem Elliptizitätswinkel - 9,736° und den Azimuthwinkeln 0°, 60° und -60° bilden die Eckpunkte der Pyramide mit dem größmöglichen Volumen, die in die Poincare-Kugel eingeschrieben werden kann.

Figur 9 zeigt eine identische, nur räumlich gedrehte Pyramide in der Poincaré-Kugel nach der erfindungsgemäßen Anordnung von Figur 1.

Die Eckpunkte werden durch zwei lineare Polarisationen mit $\pm(2*27,3675°)$ Azimuthwinkel und zwei elliptische Polarisationen mit den Elliptizitätswinkeln $\pm(2*27,3675°)$ und einem Azimuth von 90° gebildet

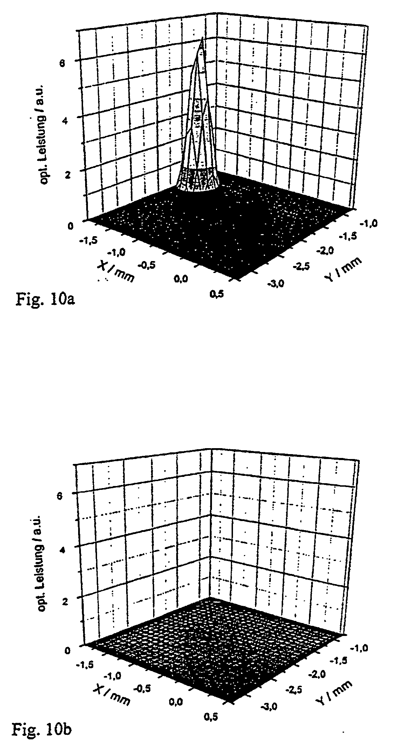

Die Figur 10 bis 12 zeigen exemplarisch aufgezeichnete Abstrahlcharakteristiken:
Figur 10 zeigt exemplarisch die Abstrahlcharakteristik eines schrägen Faser-Bragg-Gitters gemäß dem bekannten Stand der Technik bei Verwendung einer polarisierten Lichtquelle. In Figur 10a wurde die Polarisation des Lichtes zur Erzielung einer maximalen Auskopplung und in Figur 10b zur Erzielung einer minimalen Auskopplung eingestellt

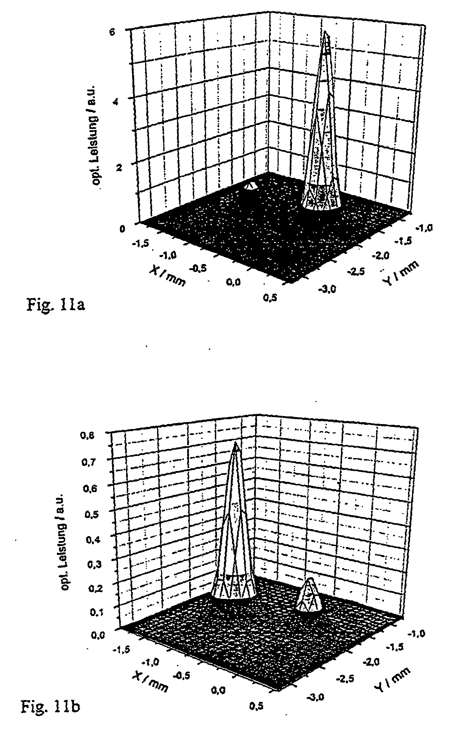

Figur 11 zeigt exemplarisch die Abstrahlcharakteristik eines speziellen Faser-Bragg-Gitters in der erfindungsgemäßen Ausführungsform. Zur Charakterisierung wurde analog zu Figur 10 die Eingangspolarisation variiert und die jeweilige Abstrahlcharakteristik in Figur 11a bzw. 11b aufgezeichnet. Im Gegensatz zu Figur 10 weist die Abstrahlcharakteristik dieses Gitters zwei räumlich getrennte und bei unterschiedlichen Polarisationen auftretende Intensitätsmaxima auf.

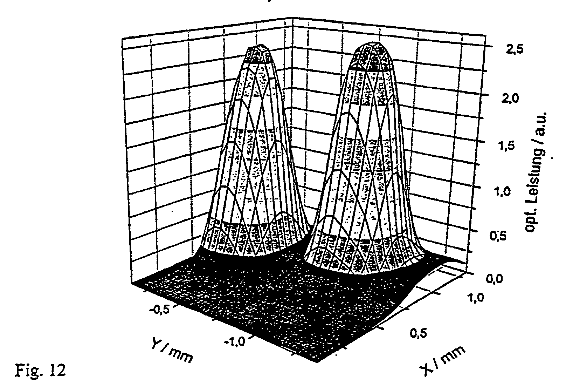

Figur 12 zeigt exemplarisch die Abstrahlcharakteristik eines speziellen Faser-Bragg-Gitters in der erfindungsgemäßen Ausführungsform. Zur Charakterisierung wurde im Gegensatz zu Figur 11 eine depolarisierte Lichtquelle verwendet. Dadurch können beide Intensitätsmaxima gleichzeitig dargestellt werden.

*Dementsprechend wird eine Anordnung, dessen Verwendung sowie Verfahren zur Bestimmung der Polarisation, des Polarisationsgrades und/oder der Leistung des in einer Glasfaser geführten Lichtes, mit einem oder mehreren, hintereinander angeordneten schrägen Faser-Bragg-Gittern vorgeschlagen, in der die Faser-Bragg-Gitter dabei polarisationsabhängig auskoppeln.*

## Bezugszeichenliste

| | |
|---|---|
| 1 | Glasfaser |
| 2 | Eingang |
| 3 | Ausgang |
| 4,5 | Spezielles Faser-Bragg-Gitter |
| 6 | Wellenplatte |
| 7,8 | Detektorpaar |
| 9,10,11,12 | Schräges Faser-Bragg-Gitter |
| 13,14,15 | Wellenplatte |
| 16 | Detektorzeile |
| 17 | polarisationserhaltende Faser |

| 18 | UV-Laser |
| 19 | Phasenmaske |
| 20 | Lichtquelle (depolarisiert) |
| 21,22 | Detektoren mit großer Fläche |
| 23 | Lichtquelle polarisiert |
| 24 | Polarisationssteller |
| 25 | Detektor mit kleiner Fläche |

**Patentansprüche**

1. Polarimeter in All-Faser-Ausführung, mit

   - mindestens einem Faser-Bragg-Gitter (4; 5), wobei jedes Faser-Bragg-Gitter (4; 5) mit einer jeweils vorgebbaren Orientierung zu einer Faserachse einer Faser (1) eingeschrieben ist, und
   den Faser-Bragg-Gittern (4; 5) zugeordneten Detektoren (7; 8),
   **dadurch gekennzeichnet,**
   **dass j**edem Faser-Bragg-Gitter (4; 5) ein Detektorpaar aus mindestens zwei Detektores (7; 8) zugeordnet ist, wobei jedes Faser-Bragg-Gitter derart ausgebildet ist, dass an jedem Faser-Bragg-Gitter (4; 5) mindestens zwei von der Polarisation des geführten Lichts abhängige Anteile des Lichts aus der Faser (1) ausgekoppelt werden und das an jedem Faser-Bragg-Gitter (4; 5) ausgekoppelte Licht räumlich getrennt abgestrahlt wird, wobei die räumlich getrennten Strahlen Intensitätsmaxima bei unterschiedlichen Polarisationszuständen aufweisen wobei pro Faser-Bragg-Gitter (4; 5) zwei Intensitätsmaxima durch die beiden Detektoren des jeweils zugeordneten Detektorpaares (7; 8) erfaßt werden.

2. Anordnung nach Anspruch 1,
   **dadurch gekennzeichnet,**
   **dass** sie mindestens zwei Faser-Bragg-Gitter (4; 5) und mindestens eine Wellenplatte (6) aufweist, die zwischen den zwei Faser-Bragg-Gittern (4; 5) angeordnet ist.

3. Anordnung nach Anspruch 2,
   **dadurch gekennzeichnet,**
   **dass** die Orientierung zwischen den mindestens zwei Faser-Bragg-Gittern (4; 5) und der Wellenplatte (6) derart ist, dass alle Intensitätsmaxima und/oder -minima bei unterschiedlichen Eingangspolarisationen auftreten.

4. Anordnung nach einem der Ansprüche 2 oder 3,
   **dadurch gekennzeichnet,**
   **dass** die Orientierung zwischen den mindestens zwei Faser-Bragg-Gittern (4; 5) und der Wellenplatte (6) sowie die Parameter der Faser-Bragg-Gitter (4; 5) derart sind, dass alle Intensitätsmaxima bzw. -minima bei Eingangspolarisationen auftreten, die bei ihrer Darstellung auf einer Poincaré-Kugel größtmögliche Abstände voneinander aufweisen.

5. Anordnung nach einem der vorhergehenden Ansprüche,
   **dadurch gekennzeichnet,**
   **dass** sie weiterhin eine Anordnung zur Berechnung der vier Stokes-Parameter aus den empfangenen Detektorsignalen aufweist.

6. Anordnung nach einem der vorhergehenden Ansprüche,
   **dadurch gekennzeichnet,**
   **dass** sie mindestens zwei Faser-Bragg-Gitter (4; 5) aufweist, die gleiche Orientierung bezüglich der Faserachse haben.

7. Anordnung nach einem der vorhergehenden Ansprüche,
   **dadurch gekennzeichnet,**
   **dass** sie mindestens zwei Faser-Bragg-Gitter (4; 5) aufweist, die unterschiedliche Orientierung bezüglich der Faserachse haben.

8. Anordnung nach einem der vorhergehenden Ansprüche,

**dadurch gekennzeichnet,**
**dass** eine oder mehrere Wellenplatten (4; 5) erzeugt worden sind durch:

- UV-induzierte Doppelbrechung im Kern der Glasfaser; und/oder
- Biegung oder Druckbelastung der Glasfaser; und/oder
- durch Abschnitte einer linear doppelbrechenden Faser.

9. Anordnung nach einem der vorhergehenden Ansprüche,
**dadurch gekennzeichnet,**
**dass** die Anordnung einen Eingang (2) und einen Ausgang (3) aufweist, und der Ausgang (3) reflexionsarm abgeschlossen ist oder durch einen weiteren Detektor, insbesondere mit vorgeschaltetem Polarisator und/oder vorgeschalteter Wellenplatte.

10. Anordnung nach einem der vorhergehenden Ansprüche,
**dadurch gekennzeichnet,**
**dass** die Faser (1) eine Einmoden-Standard-Faser, eine Einmoden-Faser mit einem vorgebbaren Dotierungsprofil oder eine doppelbrechende Faser ist.

11. Anordnung nach einem der vorhergehenden Ansprüche,
**dadurch gekennzeichnet,**
**dass** das mindestens eine Faser-Bragg-Gitter (4; 5) mittels einer Phasenmaske (19) hergestellt worden ist.

12. Anordnung nach einem der vorhergehenden Ansprüche,
**dadurch gekennzeichnet,**
**dass** die Detektoren (7,8) geeignet dimensioniert, entsprechend der Intensitätsmaxima justiert und fest mit der Faser (1) verbunden sind, wobei die Detektoren (7; 8), bevorzugt als Detektorpaare zusammengefaßt sind.

13. Anordnung nach einem der vorhergehenden Ansprüche,
**dadurch gekennzeichnet,**
**dass** die Anordnung mindestens zwei Faser-Bragg-Gitter (4; 5) aufweist, wobei die Faser-Bragg-Gitter (4; 5) derart orientiert sind und deren Auskoppeleffektivitäten sowie die Wellenplatten (6), sofern vorhanden, so dimensioniert sind, dass sich die polarisationsabhängigen Verluste der einzelnen Faser-Bragg-Gitter (4; 5) gegenseitig zumindest teilweise kompensieren.

14. Anordnung nach einem der vorhergehenden Ansprüche,
**dadurch gekennzeichnet,**
**dass** die Anordnung weitere Faser-Bragg-Gitter aufweist, deren Orientierung und Auskoppeleffektivitäten so dimensioniert sind, dass diese die polarisationsabhängigen Verluste der vorgeschalteten Faser-Bragg-Gitter oder der kompletten Anordnung zumindest teilweise kompensieren.

15. Anordnung nach einem der vorhergehenden Ansprüche,
**dadurch gekennzeichnet,**
**dass** ein Ausgang (3) der Anordnung als hochdoppelbrechende, polarisationserhaltende Faser (17) ausgeführt wird.

16. Polarimetrisches Verfahren, folgende Schritte umfassend:

a) Einkoppeln von Licht in eine Faser (1);
b) Vorsehen mindestens eines Faser-Bragg-Gitters (4; 5), wobei jedes Faser-Bragg-Gitter (4; 5) mit einer jeweils vorgebbaren Orientierung zu einer Faserachse der Faser (1) eingeschrieben ist;
c) Zuordnen eines Detektorpaars mit mindesten zwei Detektoren (7; 8) zu jedem Faser-Bragg-Gitter (4; 5); d) Auskoppeln an jedem Faser-Bragg-Gitter (4; 5) von mindestens zwei von der Polarisation des geführten Lichts abhängigen Anteilen des Lichts aus der Faser (1), wobei das an jedem Faser-Bragg-Gitter (4; 5) ausgekoppelte Licht räumlich getrennt abgestrahlt wird und die räumlich getrennten Strahlen Intensitätsmaxima bei unterschiedlichen Polarisationszuständen aufweisen; und
e) Detektion von jeweils zwei Intensitätsmaxima des an jedem Faser-Bragg-Gitter (4; 5) ausgekoppelten Lichts mittels der beiden Detektoren des jeweils zugeordneten Detektorpaars (7; 8).

**Claims**

1.  Polarimeter in all-fiber design, including
    at least one fiber Bragg grating (4; 5), each fiber Bragg grating (4; 5) being inscribed each with a presettable orientation to a fiber axis of a fiber (1), and detectors (7; 8) associated with the fiber Bragg gratings (4; 5),
    **characterized in that**
    a detector pair of at least two detectors (7; 8) is associated with each fiber Bragg grating (4; 5), wherein each fiber Bragg grating is formed such that at least two portions of light dependent on the polarization of the guided light are coupled out of the fiber (1) at each fiber Bragg grating (4; 5), and the light coupled out at each fiber Bragg grating (4; 5) is emitted spatially separated, wherein the spatially separated beams have intensity maximums at different polarization states, wherein two intensity maximums are detected by the two detectors of the respectively associated detector pair (7; 8) per fiber Bragg grating (4; 5).

2.  Assembly according to claim 1,
    **characterized in that**
    it has at least two fiber Bragg gratings (4; 5) and at least one wave plate (6) disposed between the two fiber Bragg gratings (4; 5).

3.  Assembly according to claim 2,
    **characterized in that**
    the orientation between the at least two fiber Bragg gratings (4; 5) and the wave plate (6) is such that all of the intensity maximums and/or minimums occur at different input polarizations.

4.  Assembly according to any one of claims 2 or 3,
    **characterized in that**
    the orientation between the at least two fiber Bragg gratings (4; 5) and the wave plate (6) as well as the parameters of the fiber Bragg gratings (4; 5) are such that all of the intensity maximums or minimums, respectively, occur at input polarizations having distances as great as possible to each other upon representation thereof on a Poincaré sphere.

5.  Assembly according to any one of the preceding claims,
    **characterized in that**
    it further has an assembly for calculating the four Stokes parameters from the received detector signals.

6.  Assembly according to any one of the preceding claims,
    **characterized in that**
    it has at least two fiber Bragg gratings (4; 5) having the same orientation with respect to the fiber axis.

7.  Assembly according to any one of the preceding claims,
    **characterized in that**
    it has at least two fiber Bragg gratings (4; 5) having different orientation with respect to the fiber axis.

8.  Assembly according to any one of the preceding claims,
    **characterized in that**
    one or more wave plates (4; 5) have been created by:

    -   UV-induced birefringence in the core of the glass fiber; and/or
    -   deflection or pressure load of the glass fiber; and/or
    -   by sections of a linearly birefringent fiber.

9.  Assembly according to any one of the preceding claims,
    **characterized in that**
    the assembly has an input (2) and an output (3), and the output (3) is terminated poor in reflection or by another detector, especially with preceding polarizer and/or preceding wave plate.

10. Assembly according to any one of the preceding claims,
    **characterized in that**
    the fiber (1) is a single-mode standard fiber, a single-mode fiber having a presettable doping profile or a birefringent fiber.

**11.** Assembly according to any one of the preceding claims,
**characterized in that**
the at least one fiber Bragg grating (4; 5) has been produced by means of a phase mask (19).

**12.** Assembly according to any one of the preceding claims,
**characterized in that**
the detectors (7, 8) are appropriately dimensioned, adjusted according to the intensity maximums and fixedly connected to the fiber (1), wherein the detectors (7; 8) are preferably combined as detector pairs.

**13.** Assembly according to any one of the preceding claims,
**characterized in that**
the assembly has at least two fiber Bragg gratings (4; 5), wherein the fiber Bragg gratings (4; 5) are oriented and their coupling-out efficiencies as well as the wave plates (6), if any, are dimensioned such that the losses of the individual fiber Bragg gratings (4; 5) dependent on polarization compensate for each other at least partially.

**14.** Assembly according to any one of the preceding claims,
**characterized in that**
the assembly has further fiber Bragg gratings, the orientation and coupling-out efficiencies of which are dimensioned such that they at least partially compensate for the losses of the preceding fiber Bragg gratings or of the entire assembly dependent on polarization.

**15.** Assembly according to any one of the preceding claims,
**characterized in that**
an output (3) of the assembly is configured as a highly birefringent, polarization preserving fiber (17).

**16.** Polarimetric method, including the steps of:

a) coupling light into a fiber (1);
b) providing at least one fiber Bragg grating (4; 5), wherein each fiber Bragg grating (4; 5) is inscribed with each a presettable orientation to a fiber axis of the fiber (1);
c) associating a detector pair with at least two detectors (7; 8) with each fiber Bragg grating (4; 5);
d) coupling-out at least two portions of light dependent on the polarization of the guided light from the fiber (1) at each fiber Bragg grating (4; 5), wherein the light coupled-out at each fiber Bragg grating (4; 5) is emitted spatially separated and the spatially separated beams have intensity maximums at different polarization states; and
e) detecting each two intensity maximums of the light coupled out at each fiber Bragg grating (4; 5) by means of the two detectors of the respectively associated detector pair (7; 8).

**Revendications**

**1.** Polarimètre à exécution multifibres, comprenant

- au moins un réseau de Bragg (4; 5), chacun des réseaux de Bragg (4; 5) étant inscrit avec une orientation respectivement prédéfinissable par rapport à un axe d'une fibre (1), et
- des détecteurs (7; 8) associés aux réseaux de Bragg (4; 5),

**caractérisé en ce**
**qu'**à chacun des réseaux de Bragg (4; 5), une paire de détecteurs comprenant au moins deux détecteurs (7; 8) est associée, chacun des réseaux de Bragg étant conçu de manière que sur chacun des réseaux de Bragg (4; 5), au moins deux fractions dépendant de la polarisation de la lumière véhiculée sont déclenchées de la fibre (1), la lumière délenchée sur chacun des réseaux de Bragg (4; 5) étant réfléctée séparément dans l'espace, les rayons séparés dans l'espace présentant des valeurs maxi, d'intensité à des états de polarisation différentes, deux valeurs maxi. d'intensité étant captées par réseau de Bragg (4; 5), grâce aux deux détecteurs de la paire de détecteurs respectivement associée (7; 8).

**2.** Agencement selon la revendication 1, **caractérisé en ce qu'**il comporte au moins deux réseaux de Bragg (4; 5) et au moins une lame de réflexion d'ondes (6) disposée entre les deux réseaux de Bragg (4; 5).

**3.** Agencement selon la revendication 2, **caractérisé en ce que** l'orientation entre les au moins deux réseaux de Bragg (4; 5) et la lame de réflexion d'ondes (6) est telle que toutes les valeurs d'intensité maximale et/ou minimale se produisent à deux polarisations d'entrée différentes.

**4.** Agencement selon l'une des revendications 2 ou 3, **caractérisé en ce que** l'orientation entre les au moins deux réseaux de Bragg (4; 5) et la lame de réflexion d'ondes (6) ainsi que les paramètres des réseaux de Bragg (4; 5) sont tels que toutes les valeurs d'intensité maximale et/ou minimale se produisent à des polarisations d'entrée présentant, lors de leur présentation sur une sphère de Poincaré, des intervalles les plus grands possibles.

**5.** Agencement selon l'une des revendications précédentes, **caractérisé en ce qu'**il comprend par ailleurs un dispositif de calcul des quatre paramètres de Stokes sur les signaux des détecteurs reçus.

**6.** Agencement selon l'une des revendications précédentes, **caractérisé en ce qu'**il comprend au moins deux réseaux de Bragg (4; 5) ayant la même orientation par rapport à l'axe de la fibre.

**7.** Agencement selon l'une des revendications précédentes, **caractérisé en ce qu'**il comprend au moins deux réseaux de Bragg (4; 5) ayant une orientation différente par rapport à l'axe de la fibre.

**8.** Agencement selon l'une des revendications précédentes, **caractérisé en ce qu'**une ou plusieurs lames de réflexion d'ondes (4; 5) a (ont) été générée(s) par:

- la réfraction double induite par rayons UV dans le noyau de la fibre optique; et/ou
- la flexion ou la pression exercée sur la fibre optique; et/ou
- des portions d'une fibre à réfraction double linéaire.

**9.** Agencement selon l'une des revendications précédentes, **caractérisé en ce que** l'agencement comporte une entrée (2) et une sortie (3) et **en ce que** la sortie (3) est isolée de façon anéchoïque ou par un détecteur supplémentaire, notamment à polarisateur prévu an amont et/ou à lame de réflexion d'ondes prévue en amont.

**10.** Agencement selon l'une des revendications précédentes, **caractérisé en ce que** la fibre (1) est une fibre unimodale standard, une fibre unimodale à profil de concentration de dopant prédéfinissable ou une fibre biréfringente.

**11.** Agencement selon l'une des revendications précédentes, **caractérisé en ce que** l'au moins un réseau de Bragg (4; 5) a été généré à l'aide d'un masque de phase (19).

**12.** Agencement selon l'une des revendications précédentes, **caractérisé en ce que** les détecteurs (7, 8) sont dimensionnés de façon appropriée, ajustés selon les intensités maximales et fixés à la fibre (1), les détecteurs (7; 8) étant de préférence regroupés en paires de détecteurs.

**13.** Agencement selon l'une des revendications précédentes, **caractérisé en ce que** l'agencement comprend au moins deux réseaux de Bragg (4; 5), ces derniers (4; 5) étant orientés et dont les effectivités de déclenchement ainsi que les lames de réflexion d'ondes (6), si elles existent, étant dimensionnées de façon que les pertes dépendant de la polarisation des différents réseaux de Bragg (4; 5) se compensent au moins en partie mutuellement.

**14.** Agencement selon l'une des revendications précédentes, **caractérisé en ce que** l'agencement comporte des réseaux de Bragg supplémentaires dont l'orientation et les effectivités de déclenchement sont dimensionnées de façon que ceux-ci compensent au moins partiellement les pertes dépendant de la polarisation des réseaux de Bragg d'amont ou de l'agencement entier.

**15.** Agencement selon l'une des revendications précédentes, **caractérisé en ce qu'**une sortie (3) de l'agencement est réalisée sous forme d'une fibre biréfringente (17) maintenant la polarisation.

**16.** Procédé polarimétrique comprenant les étapes suivantes:

a) injection de lumière dans une fibre (1);

b) disposition d'au moins un réseau de Bragg (4; 5), chacun des réseaux de Bragg (4; 5) étant inscrit avec une orientation respectivement prédéfinissable par rapport à un axe de la fibre (1),

c) association d'au moins une paire de détecteurs comprenant au moins deux détecteurs (7; 8) à chacun des réseaux de Bragg (4; 5);

d) déclenchement, sur chacun des réseaux de Bragg (4; 5), d'au moins deux fractions dépendant de la polarisation de la lumière véhiculée de la fibre (1), la lumière déclenchée sur chacun des réseaux de Bragg (4; 5) étant réflectée séparément dans l'espace, les rayons séparés dans l'espace présentant des valeurs maxi. d'intensité à des états de polarisation différents; et

e) captage de deux valeurs maxi. d'intensité chacune de la lumière déclenchée sur chacun des réseaux de Bragg (4; 5) grâce aux deux détecteurs de la paire de détecteurs (7; 8) respectivement associée.

Fig. 1

Fig. 2a

Fig. 2b

Fig. 3

Fig. 4 a

Fig 4 b

Fig. 5

Fig. 6

Fig. 7

Fig. 8

Fig. 9

Fig. 10a

Fig. 10b

Fig. 11a

Fig. 11b

Fig. 12